# NEW EUROPEAN PATENT SPECIFICATION

(11) **EP 1 487 249 B2**
(45) Date of publication and mention of the opposition decision: **23.10.2013**
(45) Mention of the grant of the patent: 31.12.2008
(21) Application number: 03745494.9
(22) Date of filing: 14.03.2003
(51) Int. Cl.: A01B 25/00, A01C 5/06, A01B 49/06, A01B 23/02

(54) **A SOIL TILLAGE DEVICE**
BODENBEARBEITUNGSVORRICHTUNG
DISPOSITIF DE TRAVAIL DU SOL

(30) Priority: 28.03.2002 SE 0200984
(43) Date of publication of application: 22.12.2004
(73) Proprietor: Väderstad-Verken AB, 590 21 Väderstad (SE)
(72) Inventor: STARK, Crister, S-590 21 Väderstad (SE)
(74) Representative: Stein, Jan
(86) International application number: PCT/SE2003/000430
(87) International publication number: WO 2003/081980

(56) References cited:
- EP-A1- 0 098 393
- DE-A- 1 782 008
- DE-A1- 2 352 262
- DE-A1- 19 836 627
- FR-A- 2 658 979
- GB-A- 2 161 053
- GB-A- 2 176 083
- GB-A- 2 307 389
- GB-A- 2 333 220
- SE-C2- 510 727
- US-A- 5 566 767

## Description

### TECHNICAL FIELD

The present invention relates to a soil tillage device, comprising a soil tillage portion. The present invention also refers to an agricultural machine with a similar soil tillage portion.

SE-C-510 727 describes a type of soil tillage device in the form of a levelling device, which has the task of levelling and tilling arable soil and which goes under the name levelling board, which is usually mounted on a tractor-drawn agricultural machine.

This levelling device is very effective when the soil is relatively easily cultivated, regardless of whether the soil is wet or dry, since the soil turned by the plough - the so-called furrow - can be levelled out with the levelling device. Difficulties can however arise if the soil has a high clay content, since this also means that the furrows become hard.

If it rains heavily after sowing and the weather thereafter changes from wet to dry, which can mean that the surface dries rapidly, it happens on certain soil types, particularly those of a so-called silty nature, that a hard pan forms and the seed cannot force its way through this and therefore dies. To counteract this, one can use so-called pan breaking knife or other suitable tool to carefully break up the pan without damaging the seedlings.

It happens that e.g. grass leys (green fodder) have to be harvested in the year after cereal has been harvested, whereby the ley is sown into the already sown crop. This practice is called undersowing and also occurs when leaching to lakes has to be prevented with a catch crop, e.g. grass or clover, through these taking up the soil nitrogen. In undersowing, the seed is usually placed on top of the soil surface so as not to damage the already sown crop with a tool.

GB-A-2176083 discloses a soil tillage device according to the introductory portion of claim 1.

GB-A-2 333 220 discloses an agricultural machine having seed coulters provided with harrow tines

Other prior art soil tillage devices are disclosed by DE-A-1 782 008 and FR-A-2 658 979.

### SUMMARY OF THE INTENTION

The object of the present invention is to reduce the workload of the farmer in tool changes.

This has been achieved by means of a soil tillage device according to Claim 1.

It has also been achieved by an agricultural machine according to Claim 10.

Hereby, the flexibility of the soil tillage device is increased, through the soil tillage device not having to be detached in order to attach the tool. This in turn means a time saving for the farmer.

An elongated portion is included, which during use is angled away from the direction of tillage, wherein the soil tillage portion during its use extends across the direction of tillage. Hereby, a levelling of the soil is obtained.

A curved portion and a connecting portion are suitably included, adapted to be fastened to an agricultural machine, wherein the curved portion extends between the elongated portion and the connecting portion. Furthermore, the connecting portion extends essentially in an opposing direction to that of the elongated portion. Hereby, flexibility properties are achieved in the device.

The soil tillage portion forms a separate entity, which is detachably connected to the elongated portion by means of a fastening device. Hereby, a replaceable wearing part is achieved.

The fastening device comprises a pair of parallel slits for receiving a U-shaped fastening element. Hereby, a stable connection for the tool is achieved.

In a corresponding way, the tool has a connecting portion for receiving a fastening element and it is adapted to be fastened to a soil tillage device.

The connecting portion preferably comprises at least one opening for receiving at least one fastening element. More particularly, the openings comprise a pair of parallel slits for receiving a U-shaped fastening element

The length of the slits is 45-50 mm, while the width of each slit is 7-11 mm and the distance between the slits is 9-13 mm. Primarily, the length of the slits is 47 mm, while the width of each slit is 9 mm and the distance between the slits is 11 mm.

The fastening device is advantageously arranged at the soil tillage portion.

The tool adapted to be fastened to the soil tillage portion can be a elongated pan breaking member. Alternatively, the tool can be a disc-shaped pan breaking member.

Alternatively, the tool can be a coulter entity, with at least one coulter and a tube for the supply of seed or fertilizer to the soil. By sowing with a coulter that scores a groove in the soil, e.g. in connection with undersowing, the germination rate of the seed is increased drastically. As a result of this, the amount of seed can be reduced and considerable cost savings made.

### DRAWING SUMMARY

In the following, the invention is described in more detail with reference to the attached drawings in which:
Figure 1 illustrates a tractor-drawn agricultural machine with a plurality of levelling devices;
Figure 2 illustrates another agricultural machine with one levelling device;
Figure 3a illustrates a levelling device with a plurality of lamellae arranged at an angled, replaceable shearing plate, with openings for receiving a fastening member;
Figure 3b illustrates a levelling device with a plurality of lamellae arranged at a straight, replaceable shearing plate, with openings for receiving a fastening member;
Figures 4a and 4b illustrate the shearing plate shown in Figure 3 a;
Figures 5a and 5b illustrate a fastening member for interaction with the openings according to Figures 3a, 3b and 4a and 4b;
Figures 6a and 6b show a pan breaking knife arranged at the shearing plate according to Figures 3a, 4a and 4b by means of the fastening member according to Figures 5a and 5b;
Figures 7a and 7b illustrate an alternative pan breaking knife arranged at the shearing plate according to Figures 3a, 4a and 4b by means of the fastening member according to Figures 5a and 5b;
Figure 8 illustrates an alternative pan breaking knife arranged at the shearing plate according to Figures 3a, 4a and 4b by means of the fastening member according to Figures 5a and 5b;
Figures 9a and 9b illustrate an alternative pan breaking knife arranged at the shearing plate according to Figures 3a, 4a and 4b by means of the fastening member according to Figures 5a and 5b;
Figures 10a and 10b illustrate an alternative pan breaking knife arranged at the shearing plate according to Figures 3a, 4a and 4b by means of the fastening member according to Figures 5a and 5b;
Figures 11a and 11b show a seed coulter arranged at the shearing plate according to Figures 3a, 4a and 4b by means of the fastening member according to Figures 5a and 5b;
Figures 12a and 12b illustrate a pan breaking knife with integral fastening member and arranged at the shearing plate according to Figures 3a, 4a and 4b: and
Figures 13a and 13b illustrate a shearing plate with integral fastening member.

### DETAILED DESCRIPTION

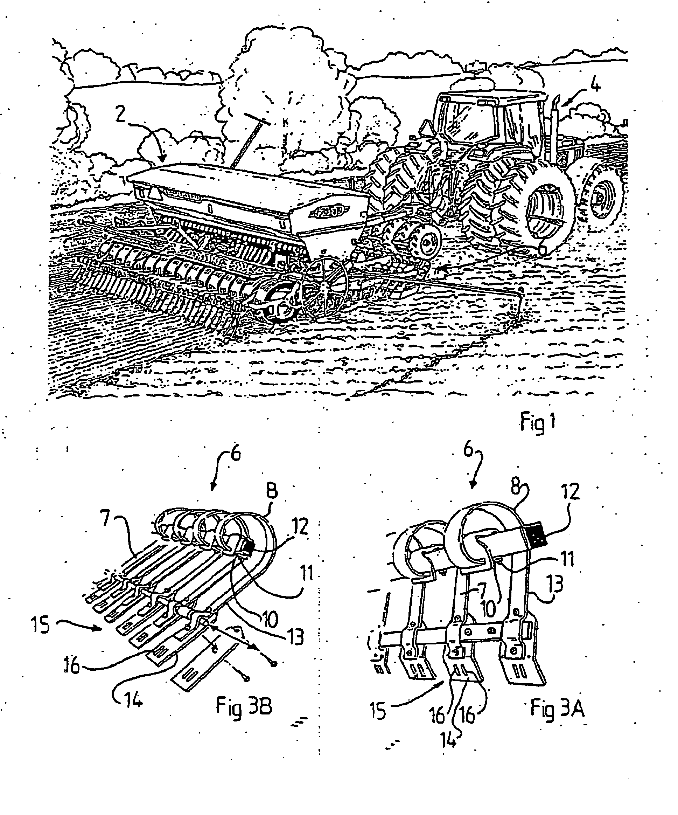

Figure 1a shows an agricultural machine 2 in the form of a seed drill drawn by a tractor 4. In the front part of the seed drill are arranged - viewed in the direction of travel - one or more levelling devices 6, comprising a plurality of lamellae 7.

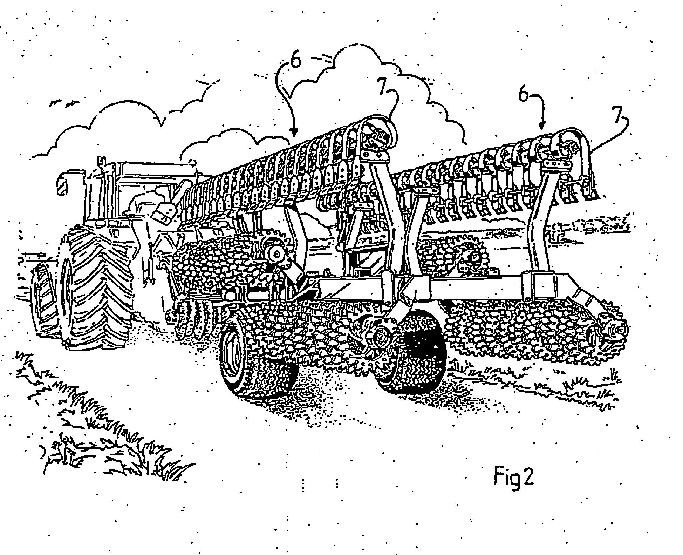

Figure 2 shows another agricultural machine 2 in the form of a ring roller, which is folded up for road transport. At the top can be seen two rows of levelling devices 6, which in tillage form a single levelling device 6 at the extreme front in the direction of travel.

Figure 3a shows a portion of the levelling device 6 with lamellae 7. Each of the lamellae 7 is manufactured from a flexible material, such as spring steel, and forms a curve 8. At the extremity of the curve 10, the lamella 7 is connected by means of screws 11 or similar to a bar 12 running across the direction of travel. At the opposite extremity the lamella 7 is formed into an elongated portion 13 and a soil tillage portion 14. The soil tillage portion 14 is according to this embodiment an angled, replaceable shearing plate, with one part of a fastening device 15 in the form of two parallel slits 16.

Figure 3b shows lamellae 7, each of which has a soil tillage portion 14 in the form of an straight, replaceable shearing plate with parallel slits 16.

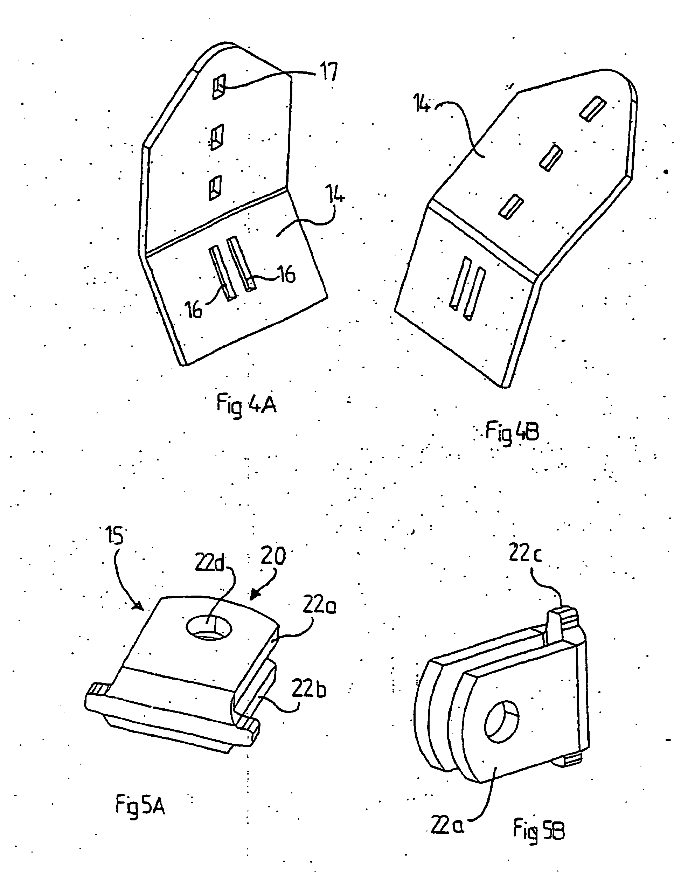

Figures 4a and 4b show the angled shearing plate according to Figure 3a, with slits 16. The length of the slits is 45-50 mm, while the width of each slit is 7-11 mm and the distance between the slits is 9-13 mm. In a particular embodiment, the length of the slits is 47 mm, while the width of each slit is 9 mm and the distance between the slits is 11 mm. The shearing plate is also provided with a part of a fastening device in the form of holes 17 for connecting to the lamella 7. The fastening device also comprises a suitable fastening organ, such as a screw, arranged to penetrate the holes 17.

Figures 5a and 5b show a further part of the said fastening device 15 in the form of a U-shaped fastening element 20 with shanks 22a, 22b adapted in size, shape and internal spacing to the openings 16 in Figures 3a-3c, and 4a and 4b, so that together they can form parts of the fastening device 15. In accordance with the dimensions of the slits 16 given above, the width of the shanks 22a, 22b is 43-48 mm, while their thickness is 5-9 mm and the distance between them is 9-13 mm. In a particular embodiment, the width of the shanks is 45 mm, while their thickness is 7 mm and the distance between them is 11 mm. The shanks are conjoined by a portion 22c, the extension of which along the shanks is 65 mm, to provide a counterstay against the shearing plate 14.

The openings in Figures 5a-5b are shown as vertical (during use), parallel slits but could equally well be horizontal or have any conceivable orientation. They can be converging or diverging instead of parallel. They can be fewer or more than two and can have any conceivable shape, e.g. circular.

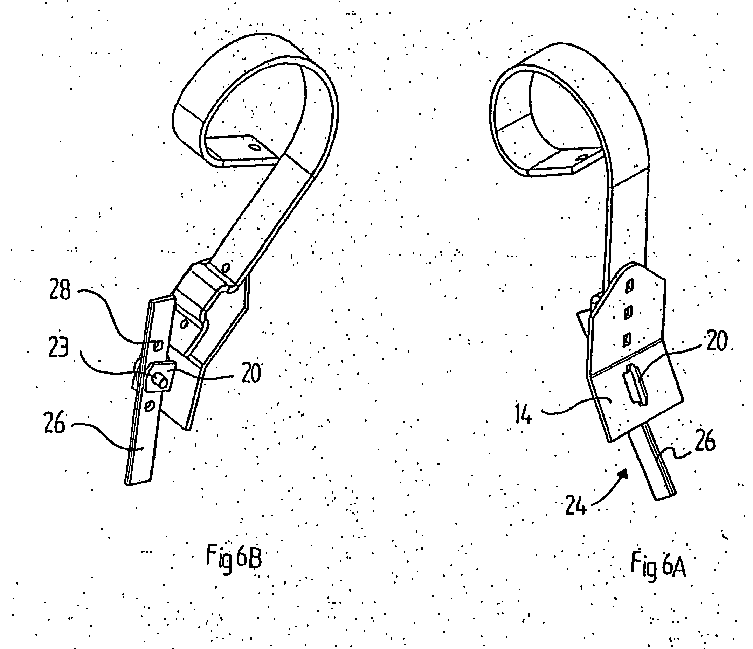

The fastening element 20 is also provided with a third part of the fastening device 15 in the form of a pair of corresponding openings 22d for receiving a fourth part of the said fastening device in the form of a locking member 23 (see for example Figure 6b).

Figures 6a and 6b show a tool 24 in the form of a pan breaking knife 26 fastened to the shearing plate 14 by means of the fastening element 20 and the locking member 23. The pan breaking knife 26 can be adjusted heightwise thanks to three openings 28, which can for example compensate for wear. Of course, the number of openings 28 can be fewer or more than three.

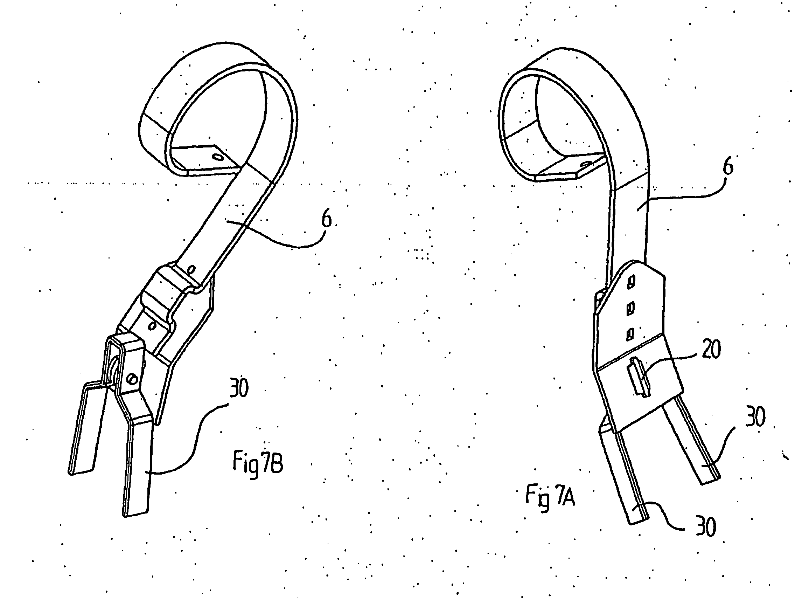

Figures 7a and 7b show an alternative pan breaking knife 26 with two shanks 30 mounted on the shearing plate on the lamella 7 to cultivate an existing soil pan at closer spacing.

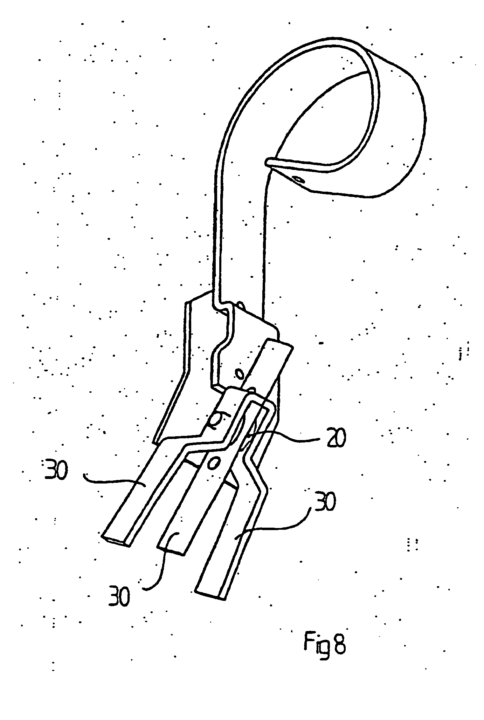

Figure 8 shows a further alternative pan breaking knife 26 with three shanks 30 mounted on the shearing plate on the lamella 7.

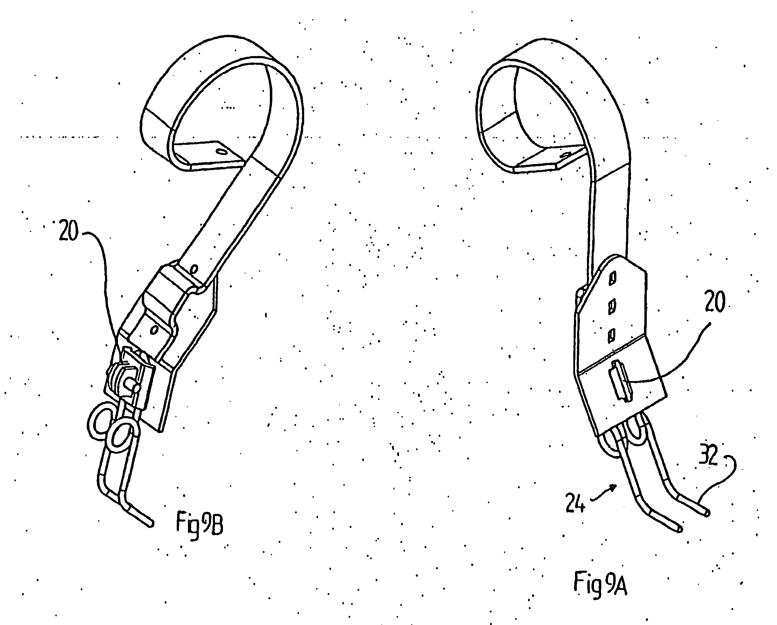

Figures 9a and 9b show a further alternative pan breaking knife 26 with two flexible prongs 32.

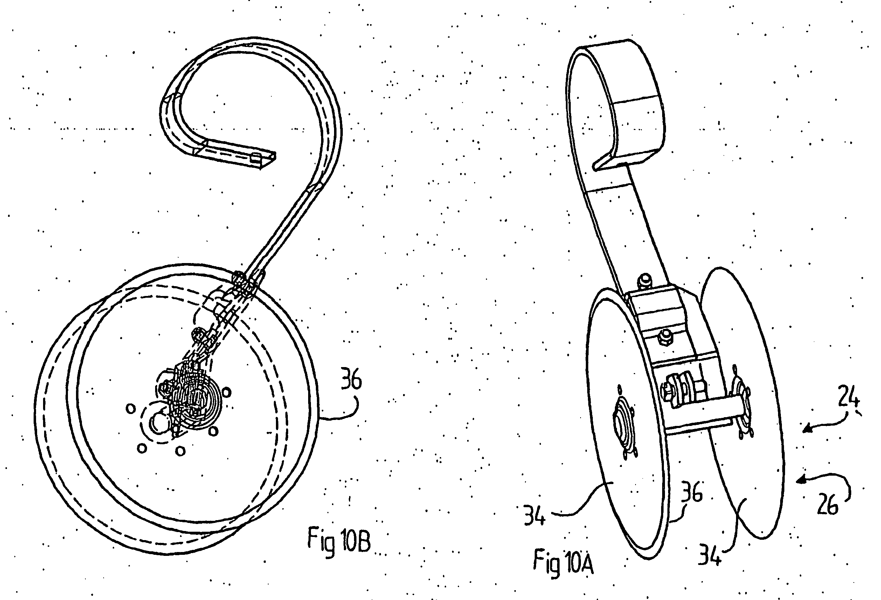

Figures 10a and 10b show a further alternative pan breaking knife 26 with two rotatable discs 34, each provided with a rim 36.

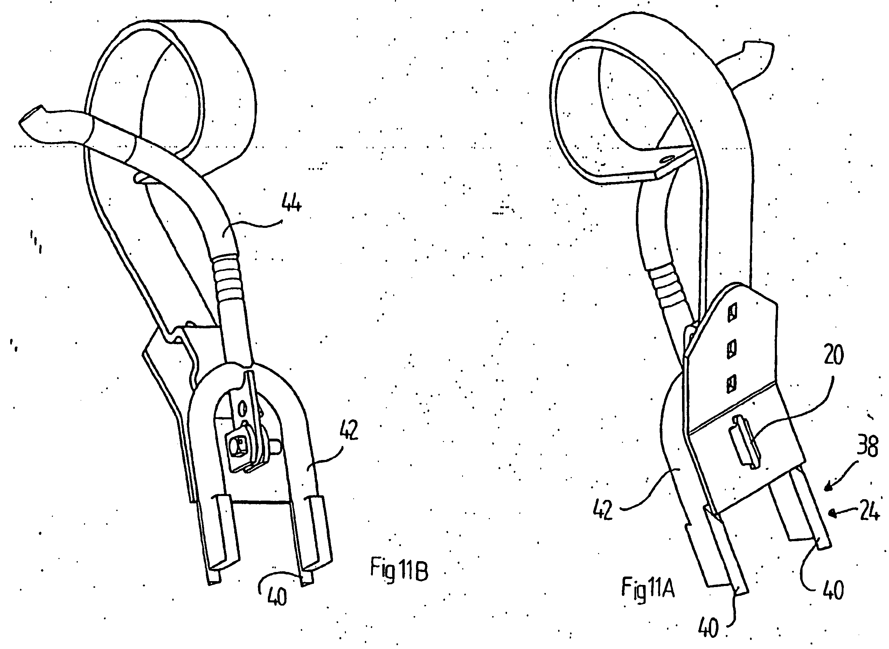

Figures 11a and 11b show a tool 24 in the form of a coulter entity 38 comprising a pair of seed or fertilizer coulters 40, with thereto arranged conduit 42, which are united in a tube 44, which transports granular material in the form of seed or fertilizer to the coulter entity 38. The coulter entity 38 is connected to the shearing plate 14 by means of the fastening element 20.

Thanks to the design of the fastening device 15, i.e. the slits 16, the fastening element 20, the openings 22 and the pin 23, the tool 24 can be attached or detached rapidly. After detachment of the tool 24, the levelling device 6 is restored to its actual function without any subsequent attachment of lamellae or shearing plates being necessary.

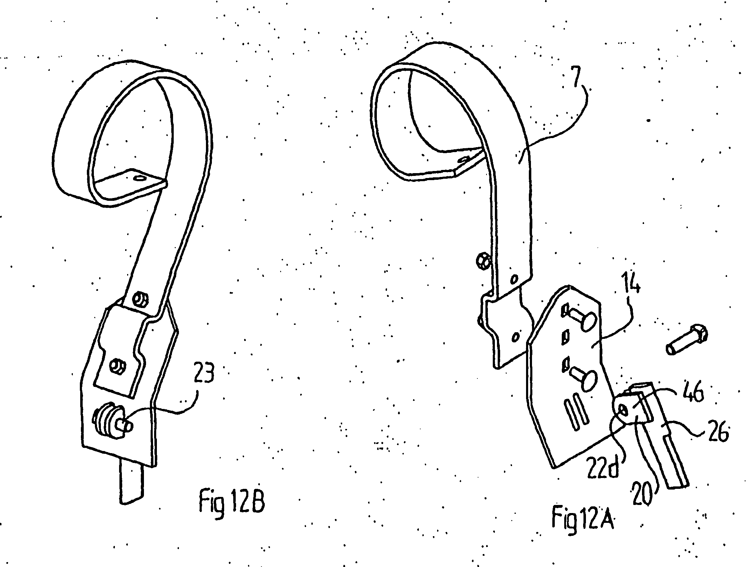

Figure 12a shows a tool 24 in the form of a pan breaking knife with welded on fastening element 20 in the form of parallel fastening members 46 with corresponding holes 22.

Figure 12b shows how the pan breaking knife 26 has been connected to the shearing plate by the fastening member 46 being introduced into the slits 16 and by a pin 23 being introduced into the holes 22.

Of course any of the tools shown in Figures 7a-11b can be provided with fastening members 46 instead of using the separate fastening element 20 shown in Figures 5a-5b.

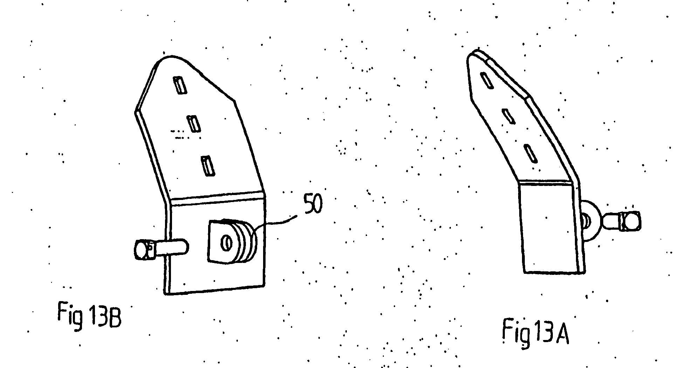

Figures 13 a and 13 b show a shearing plate 14 with integral fastening member 50, which replaces the fastening element 20 shown in Figures 5a-5b.

The locking member 23 has been described as a pin above, but may of course be any kind of fastening member.

The tool has only been shown in combination with the shearing plate 14 (see Figure 3a). Of course, the tool is also intended to be arranged together with the shearing plate 14 according to Figure 3b or the lamella according to Figure 3c.

The soil tillage device has only been shown in the figures as a levelling device. Of course, the soil tillage device can instead be a harrow tine with integral or separate harrow tip, or a cultivator tine with integral or separate cultivator tip.

## Claims

1. A soil tillage device, comprising at least one lamellae (7) having a soil tillage portion (14) in the end thereof, the soil tillage portion (14) of each lamellae (7) forms a separate entity, which is detachably connected to an elongated portion (13) of the lamellae by means of a connecting device (17), the soil tillage portion (14) is provided with a fastening device (15) for a tool (24) for soil tillage and/or spreading of granular material, **characterised in that** the fastening device (15) comprises a pair of parallel slits for receiving a U-shaped fastening element (20).

2. A soil tillage device according to Claim 1, wherein said elongated portion (13), during use is angled away from the direction of tillage, wherein the soil tillage portion (14) during its use extends across the direction of tillage.

3. A soil tillage device according to Claim 2, wherein each lamellae has a curved portion (8) and a connecting portion (10) adapted to be fastened to an agricultural machine, wherein the curved portion extends between the elongated portion (13) and the connecting portion (10).

4. A soil tillage device according to Claim 3, wherein the connecting portion (10) extends essentially in an opposing direction to that of the elongated portion (13).

5. A soil tillage device according to any one of claims 1-4, wherein the length of the slits is 45-50 mm, wherein the width of each slit is 7-11 mm and wherein the distance between the slits is 9-13 mm.

6. A soil tillage device according to Claim 5, wherein the length of the slits is 47 mm and wherein the width of each slit is 9 mm and wherein the distance between the slits is 11 mm.

7. An agricultural machine comprising a soil tillage device according to any of claims 1-6.

## Patentansprüche

1. Erdbodenbearbeitungsvorrichtung, umfassend zumindest eine Lamelle (7) mit einem Erdbodenbearbeitungsteil (14) an ihrem Ende, wobei der Erdbodenbearbeitungsteil (14) jeder Lamelle (7) eine separate Funktionseinheit bildet, die durch eine Verbindungsvorrichtung (17) abnehmbar mit einem länglichen Teil (13) der Lamelle verbunden ist, der Erdbodenbearbeitungsteil (14) mit einer Befestigungsvorrichtung (15) für ein Werkzeug (24) für Erdbodenbearbeitung und/oder Streuen von körnigem Material versehen ist, **dadurch gekennzeichnet, dass** die Befestigungsvorrichtung (15) ein Paar paralleler Schlitze zum Aufnehmen eines U-förmigen Befestigungselements (20) aufweist.

2. Erdbodenbearbeitungsvorrichtung nach Anspruch 1, wobei der längliche Teil (13) während seiner Verwendung von der Richtung der Bodenbearbeitung weg abgewinkelt ist, wobei sich der Erdbodenbearbeitungsteil (14) während seiner Verwendung quer zur Richtung der Bodenbearbeitung erstreckt.

3. Erdbodenbearbeitungsvorrichtung nach Anspruch 2, wobei jede Lamelle einen gekrümmten Teil (8) und einen Verbindungsteil (10), der dazu angepasst ist, an einer Landwirtschaftsmaschine befestigt zu werden, aufweist, wobei sich der gekrümmte Teil zwischen dem länglichen Teil (13) und dem Verbindungsteil (10) erstreckt.

4. Erdbodenbearbeitungsvorrichtung nach Anspruch 3, wobei sich der Verbindungsteil (10) im Wesentlichen in einer entgegen gesetzten Richtung zu der des länglichen Teils (13) erstreckt.

5. Erdbodenbearbeitungsvorrichtung nach einem der Ansprüche 1-4, wobei die Länge der Schlitze 45-50 mm beträgt, wobei die Breite jedes Schlitzes 7-11 mm beträgt und wobei der Abstand zwischen den Schlitzen 9-13 mm beträgt.

6. Erdbodenbearbeitungsvorrichtung nach Anspruch 5, wobei die Länge der Schlitze 47mm beträgt und wobei die Breite jedes Schlitzes 9mm beträgt und wobei der Abstand zwischen den Schlitzen 11 mm beträgt.

7. Landwirtschaftsmachine, umfassend eine Erdbodenbearbeitungsvorrichtung nach einem der Ansprüche 1-6.

## Revendications

1. Dispositif de travail du sol, comprenant au moins une lamelle (7) ayant une partie de travail du sol (14) à son extrémité, la partie de travail du sol (14) de chaque lamelle (7) formant une entité séparée, qui est reliée de manière détachable à une partie allongée (13) de la lamelle au moyen d'un dispositif de raccord (17), la partie de travail du sol (14) étant munie d'un dispositif de fixation (15) pour un outil (24) pour le travail du sol et/ou l'épandage de granulés, **caractérisé en ce que** le dispositif de fixation (15) comprend une paire de fentes parallèles pour recevoir un élément de fixation en forme de U (20).

2. Dispositif de travail du sol selon la revendication 1, dans lequel ladite partie allongée (13), lors de l'utilisation est éloignée en biais de la direction de travail, où la partie de travail du sol (14) lors de son utilisation s'étend transversalement à la direction de travail.

3. Dispositif de travail du sol selon la revendication 2, dans lequel chaque lamelle possède une partie courbée (8) et une partie de raccord (10) adaptée pour être fixée à une machine agricole, où la partie courbée s'étend entre la partie allongée (13) et la partie de raccord (10).

4. Dispositif de travail du sol selon la revendication 3, dans lequel la partie de raccord (10) s'étend essentiellement dans une direction opposée à celle de la partie allongée (13).

5. Dispositif de travail du sol selon l'une quelconque des revendications 1 à 4, dans lequel la longueur des fentes est de 45 à 50 mm, où la largeur de chaque fente est de 7 à 11 mm et où la distance entre les fentes est de 9 à 13 mm.

6. Dispositif de travail du sol selon la revendication 5, dans lequel la longueur des fentes est de 47 mm et où la largeur de chaque fente est de 9 mm et où la distance entre les fentes est de 11 mm.

7. Machine agricole comprenant un dispositif de travail du sol selon l'une quelconque des revendications 1 à 6.
